# EUROPEAN PATENT APPLICATION

(11) **EP 2 093 930 A1**
(43) Date of publication of application: **26.08.2009**
(21) Application number: 07816830.9
(22) Date of filing: 14.11.2007
(51) Int. Cl.: H04L 12/06, H04L 29/06

(54) **NET ACCESSING OPTIMIZATION METHOD, DEVICE AND SYSTEM FOR VIRTUAL MEDIA GATEWAY**

(30) Priority: 14.12.2006 CN 200610165896
(71) Applicant: Huawei Technologies Co., Ltd., Shenzhen, Guangdong Province 518129 (CN)
(72) Inventor: ZHU, Haopeng, Shenzhen Guangdong 518129 (CN)
(74) Representative: Thun, Clemens
(86) International application number: PCT/CN2007/003221
(87) International publication number: WO 2008/071060

(57) **Abstract**

A method for optimizing network accessing of virtual media gateways (VMGWs) is provided. The method solves the problems of waste of transcoder (TC) resources, waste of network transmission resources, and voice quality degradation in the prior art. The method is as follows: network entities controlling the VMGWs instruct the VMGWs in a same media gateway (MGW) to activate optimization of specific terminations in specific physical contexts, respectively; after determining that a connection relation exists between the specific physical contexts, the MGW directly connects the specific terminations. An MGW and a network system are provided.

## Description

### FIELD OF THE INVENTION

The present invention relates to the communication technology field, and more particularly to a method, a device, and a system for optimizing network accessing of virtual media gateways.

### BACKGROUND OF THE INVENTION

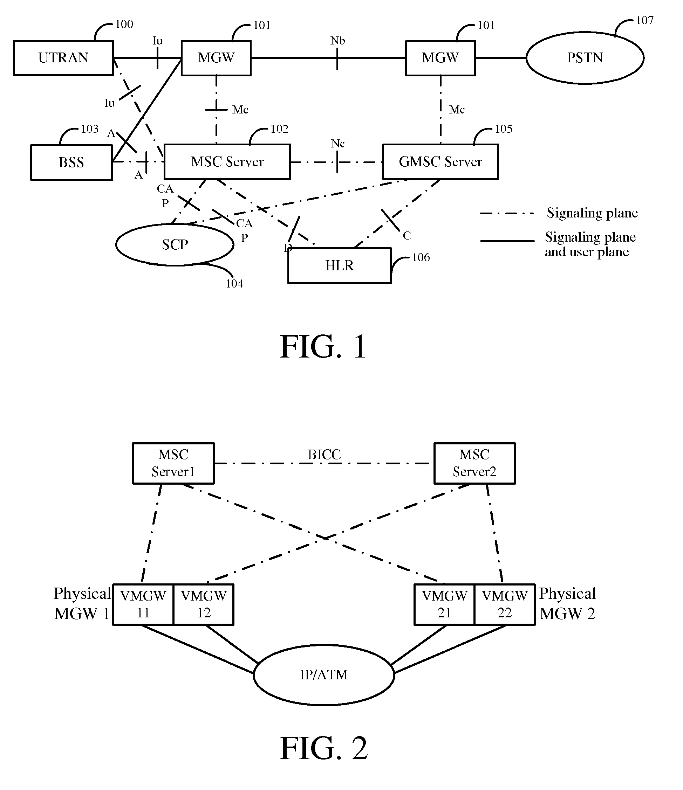

Referring to FIG. 1, in a networking structure of a circuit switched domain based on separation architecture mobile softswitch, a Universal Mobile Telecommunications System (UMTS) Terrestrial Radio Access Network (UTRAN) 100 is connected to a media gateway (MGW) 101 and a mobile-services switching center server (MSC server) 102 through Iu interfaces. A base station subsystem (BSS) 103 is connected to the MGW 101 and the MSC server 102 through A interfaces. A service control point (SCP) 104 is connected to the MSC server 102 and a gateway MSC server (GMSC server) 105 through CAP interfaces. A home location register (HLR) 106 is connected to the MSC server 102 through a D interface, and is connected to the GMSC server 105 through a C interface.

The MSC server 102 and the GMSC server 105 are connected through an Nc interface. The Nc interface is based on the Bearer Independent Call Control (BICC) signaling, which is adapted to establish and release inter-office bearers, and may also be adapted to control a plurality of bearers including IP and ATM. The MSC server 102 and the GMSC server 105 control the MGWs 101 through Mc interfaces. The Mc interfaces usually adopt H.248 signaling. The MGWs 101 are connected with each other through an Nb interface. In addition, the MGW 101 is also connected to a public switch telephone network (PSTN) 107.

In consideration of disaster recovery, one physical MGW may be virtualized into a plurality of virtual MGWs (VMGWs). Each virtual MGW is controlled by one MSC server. Referring to the schematic view of a networking structure shown in FIG. 2, a physical MGW 1 is virtualized into a VMGW 11 and a VMGW 12, and a physical MGW 2 is virtualized into a VMGW 21 and a VMGW 22. The VMGW 11 and VMGW 21 are controlled by the MSC server 1, and the VMGW 12 and VMGW 22 are controlled by the MSC server 2.

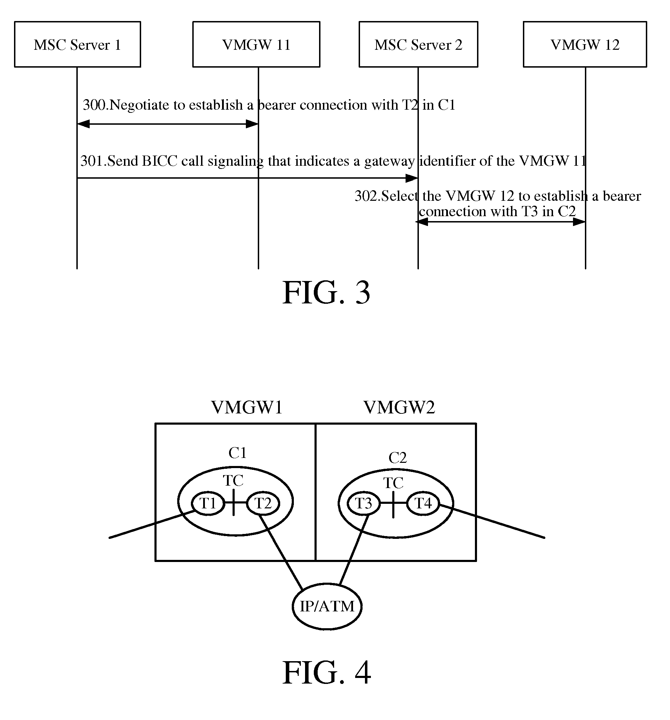

As the VMGWs are introduced, inter-office calls need to be optimized. In the prior art, the BICC may indicate a locally selected gateway identifier in the call signaling. When a peer office receives the call signaling, a gateway identifier used by the local office may be selected according to the gateway identifier selected by the peer opposite office. Thus, the same physical gateway may be selected. Referring to FIG. 3, the call process is as follows.

In Step 300, the MSC server 1 and the VMGW 11 negotiate to establish a bearer connection with T2 in C1.

In Step 301, the MSC server 1 sends BICC call signaling to the MSC server 2. The gateway identifier of the VMGW 11 is indicated in the signaling.

In Step 302, after the MSC server 2 receives the signaling, the VMGW 12 is selected according to the gateway identifier of the VMGW 11 indicated by the signaling to establish a bearer connection with T3 in C2, thereby establishing the bearers on the same physical MGW 1.

C and T in the process shown in FIG. 3 represent a context and a termination in the H.248 protocol respectively.

However, the method only realizes the selection of the gateway, but not the optimization of networking. Taking the 2G scenario for example, the topology of the bearer between two VMGWs of the same physical MGW is as shown in FIG. 4. A transcoder (TC) mainly implements the transcoding, that is, the voice is transformed from a pulse code modulation (PCM) bit stream (G.711) of time division multiplexing (TDM) into compressed code (such as AMR and G.729) suitable for transmission in an IP/ATM bearer network. It can be seen from the above description that, the above method causes waste of resources of the TC and waste of network resources for transmission, and lowers the voice quality.

### SUMMARY OF THE INVENTION

The present invention provides a method, a device, and a system for optimizing network accessing of VMGWs, which solve problems of resource waste of a TC, resource waste of network transmission, and voice quality degradation in the prior art.

The present invention provides the following technical solutions.

A method for optimizing network accessing of VMGWs is provided. The method is as follows:
network entities for controlling the VMGWs instruct the VMGWs in a same MGW to activate optimization of specific terminations in specific physical contexts respectively; and
after determining that a connection relation exists between the specific physical contexts, the MGW directly connects the specific terminations.

According to the method, when the MGW directly connects the specific terminations, if the specific terminations have already been respectively connected to a TC, the connections between the specific terminations and the TC are cut off respectively.

The network entities instruct the VMGWs in the MGW respectively according to service changes to deactivate the optimization of the specific terminations in the specific physical contexts. The MGW cuts off connections between the specific terminations according to the instructions of deactivating the optimization, and establishes a bearer connection through other terminations.

When the MGW directly connects the specific terminations, other bypassed terminations are reserved; when the optimization is deactivated, all original bearer connections are recovered by the other reserved terminations.

The network entities instruct the MGW through extended protocol messages to activate or to deactivate the optimization of the specific terminations in the specific physical contexts.

After the MGW activates or deactivates the optimization of the specific terminations in the specific physical contexts, events of activating or deactivating the optimization are reported to the network entities.

When the MGW activates or deactivates the optimization of the specific terminations in the specific physical contexts, voice channels are switched smoothly.

A gateway device is adapted to perform bearer-related operations and media stream processing according to instructions of control entities. The gateway device includes at least two virtual gateway devices. The gateway device includes a receiving unit, a determining unit, and a processing unit.

The receiving unit is adapted to receive instructions of the control entities. The instructions are to activate optimization of specific terminations in physical contexts specified by the virtual gateway devices.

The determining unit is adapted to determine whether a connection relation exists between the specific physical contexts or not.

The processing unit is adapted to directly connect the specific terminations when it is determined that the connection relation exists between the specific physical contexts.

When the instructions are to deactivate the optimization of the specific terminations in the specific physical contexts, the processing unit is further adapted to cut off connections between the specific terminations, and establish bearer connections through other terminations.

A network system includes an MGW and network entities connected to the MGW and controlling VMGWs in the MGW. The network entities are adapted to instruct the VMGWs in the same MGW to activate optimization of specific terminations in specific physical contexts respectively. The MGW is adapted to receive the instructions of activating the optimization from the network entities, and directly connect the specific terminations after it is determined that a connection relation exists between the specific physical contexts.

When the MGW directly connects the specific terminations, if the specific terminations are already connected to a TC respectively, connections between the specific terminations and the TC are then cut off respectively.

The network entities instruct the VMGWs in the MGW respectively according to service changes to deactivate the optimization of the specific terminations in the specific physical contexts. The MGW cuts off the connections between the specific terminations according to the instructions of deactivating the optimization, and establishes bearer connections through other terminations.

When the MGW directly connects the specific terminations, other bypassed terminations are reserved. When the optimization is deactivated, the original bearer connections are recovered by the other reserved terminations.

According to embodiments of the present invention, by connecting two terminations specified in physical contexts specified by the MSC servers in the two VMGWs of the same MGW, network accessing between the physical contexts of the VMGWs is optimized. Thus, TC resources are not occupied, and network resources such as IP/ATM are not occupied for transmission, so that voice quality is greatly improved.

### BRIEF DESCRIPTION OF THE DRAWINGS

FIG. 1 is a schematic view of a networking structure of a circuit switched domain based on separation architecture mobile softswitch in the prior art;

FIG. 2 is a schematic view of a networking structure of a plurality of VMGWs and MSC servers in the prior art;

FIG. 3 is a flow chart of a call in the prior art;

FIG. 4 is a topological view of the bearer between VMGWs in the prior art;

FIG. 5 is a schematic structural view of a network system according to an embodiment of the present invention;

FIG. 6 is a schematic structural view of an MGW according to an embodiment of the present invention;

FIG. 7 is a topological view of the bearer between VMGWs after optimization according to an embodiment of the present invention; and

FIG. 8 is a flow chart of the process that VMGWs activate and deactivate the optimization according to an embodiment of the present invention.

### DETAILED DESCRIPTION OF THE EMBODIMENTS

In this embodiment, a UMTS is taken as an example to illustrate the process that an MGW activates or deactivates optimization of specific terminations in specific physical contexts according to the instructions from network entities controlling VMGWs. The processes in code division multiple addressing (CDMA) softswitch or fixed softswitch are similar to that in this embodiment.

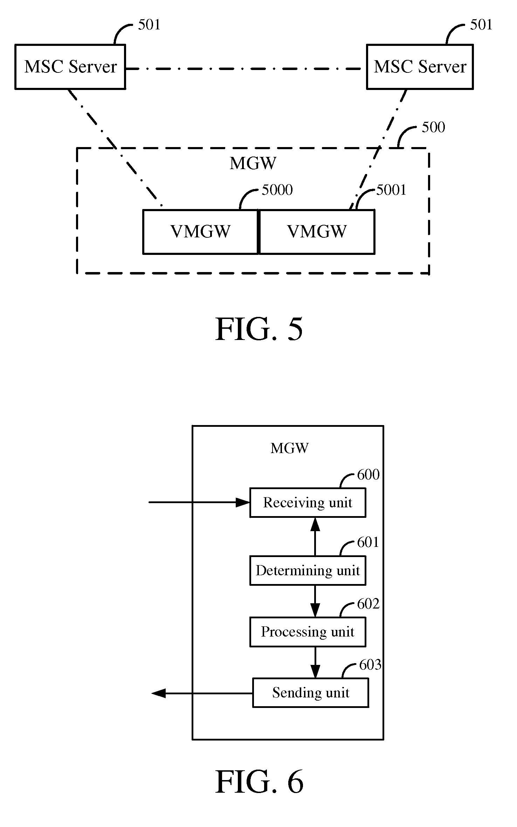

Referring to FIG. 5, in this embodiment, a network system structure includes an MGW 500, and network entities 501 connected to the MGW 500 and controlling VMGWs in the MGW 500. The network entities 501 are adapted to instruct the VMGWs in the same MGW respectively to activate optimization of the specific terminations in the specific physical contexts. The MGW 500 is adapted to receive the instructions of activating optimization from the network entities, determine whether a connection relation exists between the specific physical contexts or not according to bearer-related information (including corresponding IP addresses and port numbers of the terminations), and directly connect the specific terminations after determining that the connection relation exists. The network entities 501 may be MSC servers or MSCe (in a CDMA2000 system). In FIG. 5, the MSC servers are taken for example to illustrate the network system in this embodiment.

In order to clearly illustrate the method of the present invention, an example in which two MSC servers instruct two VMGWs in the same MGW to activate the optimization for the specific terminations in the specific physical contexts is taken in the illustration. The process that more than two VMGWs activate the optimization is similar to this process.

After the inter-office bearer is established on the MGW 500, the MSC servers 501 first determine whether the inter-office bearer is established on the two VMGWs 5000 and 5001 of the MGW 500 or not. When it is determined that the inter-office bearer is established on the two VMGWs 5000 and 5001 of the MGW 500, the MSC servers 501 deliver instructions of activating the optimization to the MGW 500, so as to connect the terminations in the specific physical contexts of the two VMGWs 5000 and 5001. The terminations are the terminations specified by the MSC servers 501.

After the MGW 500 receives the instructions of activating the optimization from the MSC servers 501, the MGW 500 first determines whether the conditions for activating the optimization are satisfied, that is, whether a connection relation exists between the specific physical contexts, and when it is determined that the connection relation exists between the specific physical contexts, the MGW 500 connects the two specific terminations in the specific physical contexts in the two VMGWs 5000 and 5001. Meanwhile, the MGW 500 also bypasses the original bearer connections, that is, when the specific terminations have already been connected to a TC, the connections between the specific terminations and the TC are cut off respectively to release the resources of the TC.

The MSC servers 501 may deliver the instructions of deactivating the optimization to the two VMGWs 5000 and 5001 in the MGW 500 according to service changes (such as switching). The connections between the terminations specified by the MSC server 501 are then cut off, and bearer connections are established with other terminations in the physical contexts in the two VMGWs 5000 and 5001. The MSC servers 501 deliver instructions of activating and deactivating the optimization to the two VMGWs 5000 and 5001 through extended protocol messages (for example, H.248 messages).

Preferably, when the MGW 500 activates the optimization, other bypassed terminations in the physical contexts of the original two VMGWs 5000 and 5001 are reserved. When the MGW 500 deactivates the optimization, the original bearer connection is recovered through the other reserved terminations, thereby deactivating the optimization rapidly.

After the MGW 500 completes the operation of activating or deactivating the optimization of the specific terminations in the specific physical contexts, the events of activating or deactivating the optimization are reported to the MSC servers 501.

Preferably, in order to reduce interferences to the user as much as possible, when the MGW 500 activates or deactivates the optimization of the specific terminations in the specific physical contexts, voice channels are also switched smoothly. For example, the original voice channel is still reserved during the switching process. After the switching is completed, the original voice channel is then cut off.

Referring to FIG. 6, in this embodiment, the MGW 500 includes a receiving unit 600, a determining unit 601, and a processing unit 602. The receiving unit 600 is adapted to receive the instructions from the MSC servers. The instructions are to activate optimization of the specific terminations in the physical contexts specified by the two VMGWs in the same MGW. The determining unit 601 is adapted to determine whether a connection relation exists between the specific physical contexts or not. The processing unit 602 is adapted to connect the specific terminations after it is determined that the connection relation exists between the specific physical contexts. When the instructions are to deactivate the optimization of the specific terminations, the processing unit 602 is also adapted to cut off the connections between the specific terminations, and establish bearer connections through other terminations. In addition, the MGW 500 further includes a sending unit 603, which is adapted to report the events of activating and deactivating the optimization to the MSC servers 500.

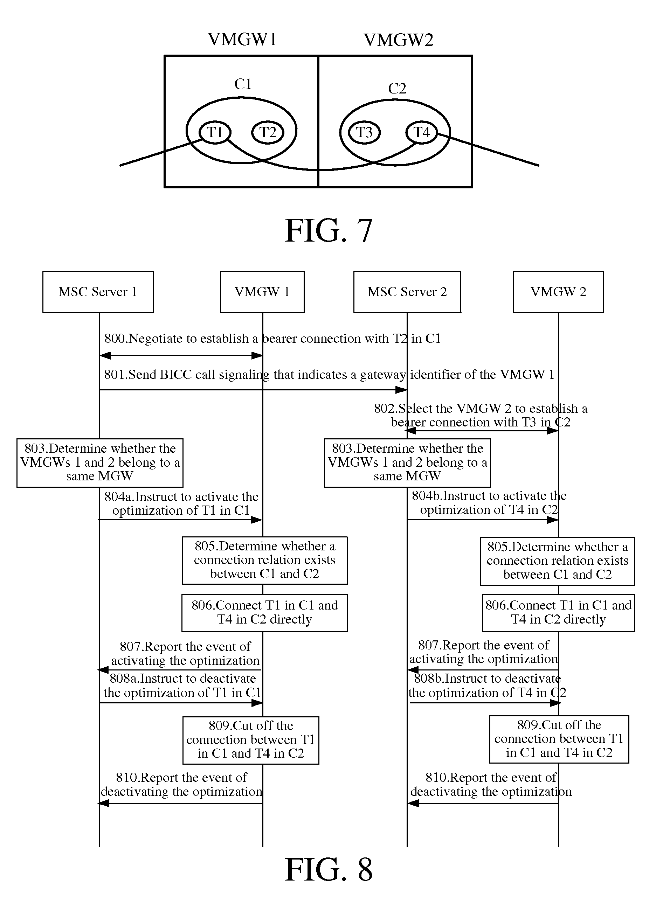

In order to illustrate the method of the present invention more clearly, a VMGW 1 and a VMGW 2 in a same MGW are taken as an example for illustration. The VMGW 1 and the VMGW 2 are controlled by an MSC server 1 and an MSC server 2 respectively. The physical context specified by the MSC server in the VMGW 1 is referred to as C1, in which the specific termination to be optimized is T1, and the termination of the original bearer connection is T2. The physical context specified by the MSC server in the VMGW 2 is referred to as C2, in which the specific termination to be optimized is T4, and the termination of the original bearer connection is T4. FIG. 7 is a topological view of the bearer between the VMGWs after the optimization.

Referring to FIG. 8, in this embodiment, the process that VMGWs activate and deactivate the optimization is as follows.

In Step 800, the MSC server 1 and the VMGW 1 negotiate to establish a bearer connection with T2 in C1.

In Step 801, the MSC server 1 sends BICC call signaling to the MSC server 2. A gateway identifier of the VMGW 1 is indicated in the signaling.

In Step 802, after the MSC server 2 receives the signaling, the VMGW 2 is selected according to the gateway identifier of the VMGW 1 indicated by the signaling to establish bearer connection with T3 in C2, thereby establishing the bearers on a same physical MGW.

In Step 803, the MSC server 1 controlling the VMGW 1 and the MSC server 2 controlling the VMGW 2 determine whether the VMGW 1 and the VMGW 2 belong to the same MGW or not.

In Step 804a-804b, after the MSC servers 1 and 2 determine that the VMGWs 1 and 2 belong to the same MGW, the instructions of activating the optimization are delivered to the VMGWs 1 and 2 to activate the optimization of the specific terminations T1 and T4 in the specific physical contexts C1 and C2.

In Step 805, after the same MGW receives the instructions of activating the optimization, it is determined whether the VMGWs 1 and 2 satisfy conditions of the optimization or not according to the bearer-related information (including corresponding IP addresses and port numbers of the terminations), that is, whether a connection relation exists between the physical contexts C1 and C2 or not.

In Step 806, when the same MGW determines that the connection relation exists between the physical contexts C1 and C2 of the VMGWs 1 and 2, the optimization is activated, that is, T1 in C1 and T4 in C2 are connected.

In Step 807, after the same MGW completes activating the optimization, the events of activating the optimization are reported to the MSC servers 1 and 2.

In Step 808a-808b, when services are changed (for example, switched), the MSC server 1 controlling the VMGW 1 and the MSC server 2 controlling the VMGW 2 deliver instructions of deactivating the optimization to the VMGW 1 and VMGW 2, that is, to deactivate the optimization of the specific terminations T1 and T4 in the specific physical contexts C1 and C2.

In Step 809, after the same MGW receives the instructions of deactivating the optimization, the optimization is deactivated. That is, the resources of the TC are applied for, connections between T1 in C1 and T4 in C2 are cut off, T1 and T2 are connected through the TC, T3 and T4 are connected through the TC, and T2 and T3 are connected through the IP/ATM network.

In Step 810, after the same MGW completes deactivating the optimization, the events of deactivating the optimization are reported to the MSC servers 1 and 2.

In Step 806, at the same time, as T1 in C1 and T4 in C2 are connected by the same MGW, if T1 and T4 are already connected to the TC respectively, then the connection between T1 and the TC, and the connection between T4 and the TC are both cut off to release the resources of the TC. The same MGW still reserves T2 and T3 originally connected to the IP/ATM network, so that the operation of deactivating the optimization is completed rapidly in the following steps.

In Step 809, the same MGW recovers the original bearer connections through T2 and T3. T2 and T3 mentioned here are the two bypassed terminations that are reserved when the same MGW activates the optimization. Thus, the optimization can be deactivated rapidly. Here, bearer connections may be established again through other terminations.

Although this embodiment is illustrated by taking the MGW in the UMTS system as an example, the present invention is not limited to the embodiment. The method is also applicable to a network device having similar functions as the MGW in other communication systems.

It is known from the above embodiment that, in the present invention, by connecting the two specific terminations in the physical contexts specified by the MSC servers in the two VMGWs in the same MGW, the network accessing between the physical contexts of the VMGWs is optimized. The TC resources and network resources such as IP/ATM do not need to be occupied for transmission, and the voice quality is improved greatly. Further, when the VMGWs activate the optimization, the terminations originally connected to the IP/ATM network are reserved, so that the VMGWs may deactivate the optimization rapidly.

It will be apparent to those skilled in the art that, various modifications and variations can be made to the present invention without departing from the scope or spirit of the invention. In view of the foregoing, it is intended that the present invention cover modifications and variations of this invention provided that they fall within the scope of the following claims and their equivalents.

## Claims

1. A method for optimizing network accessing of virtual media gateways, VMGWs,
**characterized in that,** the method comprises:
instructing, by a network entity for controlling the VMGWs, the VMGWs in a same media gateway, MGW, to activate optimization of specific terminations in specific physical contexts respectively; and
connecting, by the MGW, directly the specific terminations after determining that a connection relation exists between the specific physical contexts.

2. The method according to claim 1, wherein, when the MGW directly connects the specific terminations, if the specific terminations have already been respectively connected to a transcoder, the connections between the specific terminations and the transcoder are cut off respectively.

3. The method according to claim 1, wherein, the network entity instruct the VMGWs in the MGW respectively according to service changes to deactivate the optimization of the specific terminations in the specific physical contexts; the MGW cuts off connections between the specific terminations according to the instructions of deactivating the optimization, and establishes a bearer connection through other terminations.

4. The method according to claim 3, wherein, when the MGW directly connects the specific terminations, other bypassed terminations are reserved; when the optimization is deactivated, all original bearer connections are recovered by the other reserved terminations.

5. The method according to any one of claims 1-4, wherein, the network entity instructs the MGW through extended protocol messages to activate or to deactivate the optimization of the specific terminations in the specific physical contexts.

6. The method according to claim 5, wherein, after the MGW activates or deactivates the optimization of the specific terminations in the specific physical contexts, events of activating or deactivating the optimization are reported to the network entity.

7. The method according to claim 5, wherein, when the MGW activates or deactivates the optimization of the specific terminations in the specific physical contexts, voice channels are switched smoothly.

8. A gateway device, adapted to perform bearer-related operations and media stream processing according to instructions of control entities, the gateway device comprises at least two virtual gateway devices, **characterized in that**, the gateway device comprises:
a receiving unit, adapted to receive instructions of the control entities, wherein the instructions are to activate optimization of specific terminations in physical contexts specified by the virtual gateway devices;
a determining unit, adapted to determine whether a connection relation exists between the specific physical contexts or not; and
a processing unit, adapted to directly connect the specific terminations when it is determined that the connection relation exists between the specific physical contexts.

9. The gateway device according to claim 8, wherein, when the instructions are to deactivate the optimization of the specific terminations in the specific physical contexts, the processing unit is further adapted to cut off connections between the specific terminations, and establish bearer connections through other terminations.

10. A network system, **characterized by** comprising:
a media gateway, MGW, and a network entity connected to the MGW and controlling virtual media gateways, VMGWs, in the MGW, the network entity is adapted to instruct the VMGWs in the same MGW to activate optimization of specific terminations in specific physical contexts respectively; the MGW is adapted to receive the instructions of activating the optimization from the network entity, and directly connect the specific terminations after it is determined that a connection relation exists between the specific physical contexts.

11. The system according to the claim 10, wherein, when the MGW directly connects the specific terminations, if the specific terminations are already connected to a transcoder respectively, connections between the specific terminations and the transcoder are then cut off respectively.

12. The system according to the claim 10, wherein, the network entity instruct the VMGWs in the MGW respectively according to service changes to deactivate the optimization of the specific terminations in the specific physical contexts, the MGW cuts off the connections between the specific terminations according to the instructions of deactivating the optimization, and establishes bearer connections through other terminations.

13. The system according to claim 12, wherein, when the MGW directly connects the specific terminations, other bypassed terminations are reserved, and when the optimization is deactivated, the original bearer connections are recovered by the other reserved terminations.
